# EUROPEAN PATENT APPLICATION

(11) **EP 3 486 538 A1**
(43) Date of publication of application: **22.05.2019**
(21) Application number: 17201783.2
(22) Date of filing: 15.11.2017
(51) Int. Cl.: F16K 31/528, F16K 31/04, F15B 13/044

(54) **ACTUATOR ASSEMBLY FOR A HYDRAULIC VALVE, AND HYDRAULIC VALVE ASSEMBLY**

(71) Applicant: Robert Bosch GmbH, 70442 Stuttgart (DE)
(72) Inventor: HEGEDUS, Csaba, 2030 Erd (HU)
(74) Representative: Maiß, Harald

(57) **Abstract**

Disclosed is an actuator assembly for a hydraulic valve, comprising: a rotor rotatable about an axis; and an output member for actuating a spool; wherein one of the rotor and the output member comprises a wall whose trajectory is at least in regions helical with respect to the axis, wherein the wall engages with a protrusion provided on the other of the rotor and the output member, the actuator assembly is configured so that relative rotation between the rotor and the output member about the axis urges the output member relative to the rotor in the direction of the axis, and the wall extends around only a part of the periphery of the one of the rotor and the output member when viewed along the axis.

## Description

### Field of the Invention

The invention relates to an actuator assembly for a hydraulic valve according to the preamble of claim 1, and to a hydraulic valve assembly comprising the actuator assembly.

### Background of the Invention

Hydraulic valve assemblies known from prior art may comprise a hydraulic valve including a linearly reciprocating spool in a housing. By moving the spool, passages in the housing are opened or restricted. In this way directional control of a fluid through the passages is possible.

It is known to achieve linear motion (i.e. translation) of the spool by means of an actuator comprising an electromechanical solenoid which exerts a force on the spool, when energized. However much electrical power must be consumed in order to apply high forces. This can lead to elevated temperatures and reduced reliability of the solenoid.

It is also known in the prior art to actuate the spool through a secondary fluid circuit wherein secondary fluid pressure is applied to one end of the spool via a pilot valve. Actuation of the pilot valve may be by means of a low power solenoid. The secondary fluid circuit combines mechanical operation of the pilot valve with the hydraulic actuation of the spool.

Alternatively the spool may be actuated by an electric motor. Accordingly a valve control system is known from CN102278516 A1 wherein a multi-directional solenoid valve comprises a stack valve, an electric actuator, and a spool neutrality return mechanism. The stack valve is used as a solenoid valve. The electric actuator, which activates the stack valve, comprises a motor which is arranged coaxially with a spool and a ball screw decelerator which is installed between the output shaft of the motor and the spool. The spool neutrality return mechanism is installed between the stack valve and the electric actuator.

EP2916052 A1 discloses a valve plate with a main body, in which a control slide is movably received. Furthermore, the valve plate has a gearwheel mechanism and an electric motor, the electric motor being rotationally drive-connected to the gearwheel mechanism. The gearwheel mechanism drives a rack connected to the control slide; the rack is connected to the control slide substantially non-rotatably via a flexible coupling rod.

US6793194 B1 and US3401764 A each disclose a hydraulic valve actuator.

### Summary of the Invention

It is an object of the invention to provide an actuator assembly for a hydraulic valve, that is compact and easy to manufacture. It is a further object to provide a hydraulic valve assembly comprising the actuator assembly.

The objects are achieved by the subject-matter of claims 1 and 6 respectively. Advantageous further developments are subject-matter of the dependent claims.

An actuator assembly having the features of claim 1 has the following advantages. The actuation can be performed entirely mechanically, obviating the need for a secondary fluid circuit, so the conversion of rotation into translation is simply achieved. Robustness of the actuator assembly is improved in comparison to an example in which the wall extends around the entire periphery of the one of the rotor and the output member when viewed along the axis. Manufacturing is facilitated because the peripheral extent of the wall is limited.

An actuator assembly having the features of claim 2 has the following additional advantages. A compact actuator assembly is achieved because the output member is provided inside the rotor. The rotor can be easily driven and/or supported on its outer periphery because it is unobstructed by the output member. The rotor can support the output member, which yields a simple construction.

An actuator assembly having the features of claim 3 has the following additional advantages. A more compact construction is achieved. Any translation of the output member can be easily supported because the wall - which could interfere with the translation if provided on the output member - is provided on the rotor, leading to simpler bearing requirements. Any rotation of the rotor can be easily supported because the wall (which does not interfere so much with the rotation since any rotor bearings can be provided on regions away from the wall) is provided on the rotor, further leading to simpler bearing requirements. The output member need not translate coaxially with the rotor, but can lie e.g. parallel to the rotor, leading to greater design options. When combined with the subject-matter of claim 2, a large pitch circle diameter of the helical trajectory is ensured which reduces operational loads. Additionally a compact actuator assembly is further achieved without compromising robustness because the output member is provided within the rotor, and the wall of the rotor extends around only a part of the periphery of the rotor when viewed along the axis. Thus a hole can be provided in the rotor, yet sufficient load-bearing material remains on the rotor so as not to compromise its robustness.

An actuator assembly having the features of claim 4 has the following additional advantages. The actuating member urges the pin under both clockwise and counter-clockwise rotation, that is to say the motor can reciprocate the output member; the need for a biasing member is obviated and positioning of the output member is more secure.

An actuator assembly having the features of claim 5 has the following additional advantages. Operational loads are distributed between the slots so wear and uneven loading is reduced, compared to an arrangement with a single slot, so the construction is made more robust. The provision of material between the multiple slots further improves robustness.

A hydraulic valve assembly having the features of claim 6 has the advantages of any of the preceding claims.

The hydraulic valve assembly, preferably the actuator assembly, may comprise a motor and further preferably a transmission, for driving the rotor. The axes of rotation of the rotor, motor, and all transmission elements in any transmission, may have axes along the same direction. In this way the mechanism is yet more compact and its manufacture is simplified.

A hydraulic valve assembly having the features of claim 7 has the following additional advantages. Reliable actuation of the spool is ensured by restricting the rotation of the output member and restricting also the translation of the rotor. Neither the output member nor the rotor needs to perform a combination of translation and rotation, leading to simpler bearing requirements. Any mechanical connection between the output member and the spool is facilitated.

### Description of Figures

Preferable embodiment examples of the invention are explained in more detail in the following, with the help of schematic drawings, wherein like numerals are used to represent like elements and wherein:
Fig. 1 shows a hydraulic valve assembly including an actuator assembly according to a first embodiment.
Fig. 2 shows a hydraulic valve assembly including an actuator assembly according to a second embodiment.

### Detailed Description of Embodiments

### First Embodiment

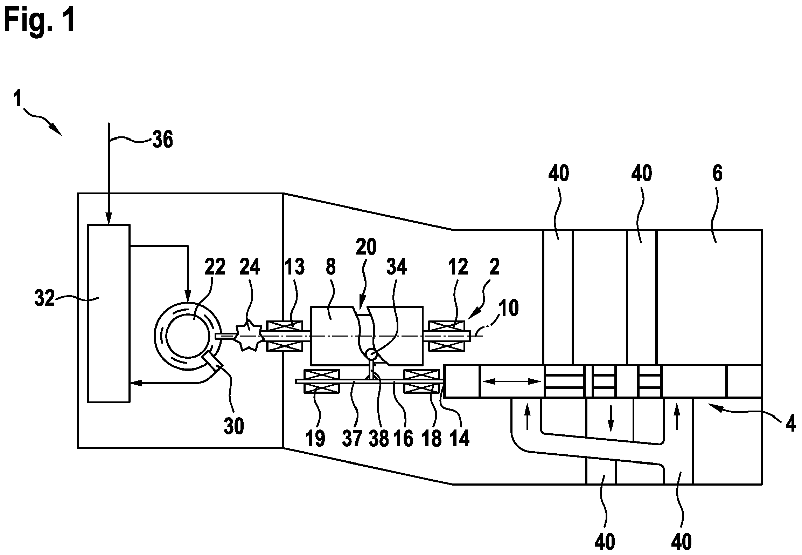

A first embodiment is described in the following with reference to Fig. 1 which shows a hydraulic valve assembly 1 comprising an actuator assembly 2.

The hydraulic valve assembly 1 has a housing 6 comprising passageways 40 for hydraulic fluid to pass through, and a substantially cylindrical channel in which a substantially cylindrical spool 4 is axially slidably provided. Fluid pressurized by a pump can either flow from one port to another or be restricted from flowing, depending on the position of the spool 4 relative to the housing's passageways 40. The spool and housing form a hydraulic valve, in particular a directional control valve.

The hydraulic valve assembly 1 comprises an actuator assembly 2 to actuate the spool 4. The actuator assembly 2 has a translatable output member 16 connected to a rotor 8 as is explained further below.

The output member 16 and the spool 4 are connected at their axial ends at an interface 14 between the hydraulic valve and the actuator assembly 2. The position of the output member 16 sets the position of the spool 4; thus linear movement of the output member 16 moves the spool 4 linearly.

The actuator assembly 2 comprises an essentially cylindrical rotor 8 supported by two bearings 12, 13 provided at the rotor's axial ends. The bearings 12, 13 support the rotor 108 rotationally and axially. The axis of rotation 10 of the rotor 8 is hereinafter referred to as "rotor axis". The outer periphery of the rotor 8 is provided with a slot 20 which is at least partially inclined to the rotor axis 10 when viewed in a direction which is orthogonal to the rotor axis 10, i.e. at least part of the slot 20 is helical. The rotor 8 is rotatable about the axis 10 while its translation along the axis 10 is restricted.

The output member 16 comprises a main body 37 and an extension 38, and is guided in its linear movement by two linear bearings 18, 19 provided along the axis of the main body 37, one on either side of the extension 38. The linear bearings 18, 19 may also restrict rotation of the output member 16. Alternatively a separate rotation restricting means (e.g. square output member or splined coupling) may be provided externally to the actuator assembly 2 to cooperate with the output member 16.

The extension 38 extends radially outward from the main body 37. A pin 34, which forms a type of protrusion, is fixed to the other end of the extension 38.

The slot 20 in the rotor 8 engages with the pin 34 which may be provided with a bearing (not shown) so that the pin 34 does not make direct engagement with the slot 20 but rather indirect engagement via the bearing. Thus the slot 20 may engage with the pin 34 via a bearing. A clearance may be provided between the bearing and the slot 20 walls. The pin 34 and/or slot surfaces may alternatively or in addition be provided with low friction treatments such as a coating.

The rotor 8 is connected to a motor 22 via a transmission 24 (e.g. comprising a gear train) which adjusts the speed and torque of the motor shaft 22 to suit the rotation of the rotor 8. In the present embodiment the motor shaft axis is coaxial with the rotor axis 10. Alternatively the axes of rotation of the motor 22 and rotor 8 may be e.g. parallel. The transmission 24 may, alternatively to a gear train, comprise a direct drive between the motor shaft 22 and the rotor 8.

The hydraulic valve assembly 1 comprises an ECU (electronic control unit) 32 configured to control the motor 22 based on a signal 36 from a CAN (controlled area network). The motor 22 is a DC motor provided with a sensor 30, such as a speed or position sensor, configured to transmit a feedback signal to the ECU 32. Thus the ECU 32 and the motor 22 can communicate with each other to control the speed of the motor 22. The ECU 32 may comprise a circuit board, and may perform other functions.

The actuator assembly 2 is configured so that rotation of the rotor 8 is converted to linear movement (translation) of the output member 16. More specifically, the motor 22 rotates the rotor 8, which urges a wall of the slot 20 against the pin 34. Meanwhile axial movement of the rotor 8 is restricted. The slot wall has a first portion which is inclined (helical) to the rotor axis 10. Therefore the pin 34 being fixed to the output member 16 which is free to move only along its longitudinal axis (its rotation is restricted) moves due to urging from the slot wall. Thus the actuator assembly 2 is a type of motion conversion mechanism that converts rotation into translation.

The slot wall has a second portion joining the first portion, which has a trajectory orthogonal to the rotor axis 10. When the second portion of the slot 20 engages with the pin 34, the output member 16 is further restricted from translation. Thus the angle of rotation of the rotor 8 can be set so that the output member 8 (and so also the spool 4) is held in a predetermined position. Forces transmitted from the spool 4 to the rotor 8 are not transmitted to the motor 22. Alternatively other trajectories are possible, e.g. constant or varying helix.

The first embodiment has the following advantages.

The valve actuator assembly 2 actuates the spool 4 by means of a cylindrical cam mechanism as a motion conversion mechanism which converts rotation of the motor shaft to translation (linear movement) of the spool 4. The actuator control is therefore entirely and directly electro-mechanical and not hydraulic, i.e. there is no need for a secondary hydraulic (pilot oil) circuit.

The motor shaft is coaxial with the output member 16. The arrangement is compact in the radial direction.

The slot 20 need not extend all the way around the periphery of the rotor, unlike the helical groove of a lead screw. The rotor is more robust and its manufacture is facilitated.

Because the rotor 8 is restricted from translation, the bearings 12, 13 that support the rotor 8 can be provided on either side of the slot 20 without interfering with the slot 20. No slot needs to be provided on the output shaft 16 to interfere with the linear bearings 18, 19.

The angle of inclination of the slot 20 may be more freely selected than for a ball screw arrangement whose thread pitch design is limited by e.g. manufacturing considerations. A less complex transmission (and lower overall gear ratio) may be used. Also the angle of inclination of the slot 20 may be selected to vary along the length of the slot 20 so the spool actuation can be better adapted to the particular application.

The engagement of the pin 34 in the slot 20 does not require a recirculating ball bearing path, nor a nut having a corresponding helical groove, as in the case of a ball screw arrangement. The manufacture is facilitated. Many elements are common commercial parts (e.g. pin, bearings, gears) so the manufacture is further facilitated.

The contact between the pin 34 and the slot 20 is a line contact. Surface pressure is reduced compared to arrangements having a point contact, e.g. rack and pinion arrangements having a point contact between the rack and the pinion. Wear performance is improved, and can be easily adapted by adjusting the depth of engagement of the pin 34 in the slot 20.

The slot 20 having two facing walls engages with the pin 34. Therefore when the motor 22 turns in one sense (e.g. clockwise), the spool 4 moves in one direction by means of one slot wall bearing on the pin 34 from one side. When the motor 22 turns in the other sense (e.g. counter-clockwise), the other slot wall bears on the pin 34 from the other side and the spool 4 moves in the other direction, so desmodromic urging originating only from the motor shaft is effected. Control of the spool 4 can be performed entirely by rotation of the motor 22 in either direction. Movement of the spool is more securely controlled, and without the need of a return spring.

### Second Embodiment

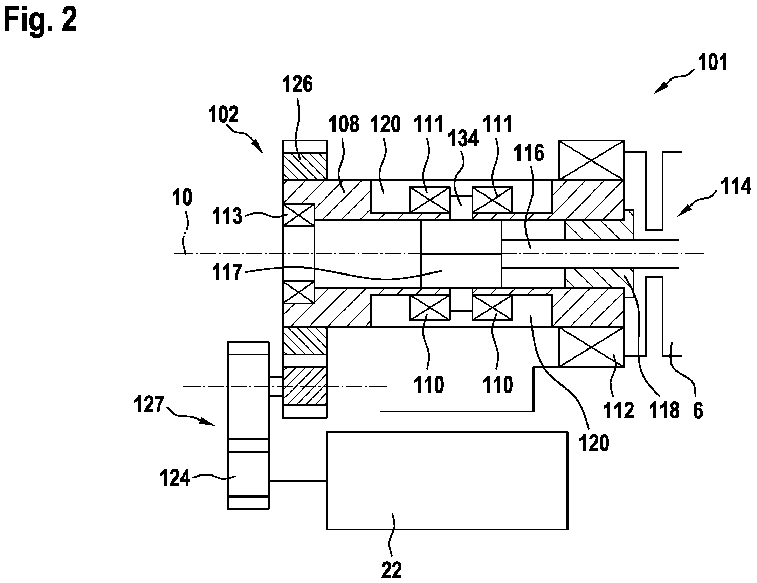

A second embodiment is described in the following with reference to Fig. 2 which shows a partial, sectional view of a hydraulic valve assembly 101.

The hydraulic valve assembly 101 includes a hydraulic valve comprising a spool (not shown) and a housing 6 comprising passageways (passageways are not shown). The spool can move linearly (translate) within a hole in the housing 6.

The hydraulic valve assembly 101 has an actuator assembly 102 for actuating the spool, comprising a rotor 108 connected to the spool at an interface 114 between the hydraulic valve and the actuator assembly 108. A first 112 and a second 113 bearing are fixed at ends of the rotor 108 by e.g. form fit, press fit, or chemical bond, and are mounted also to the housing 6; they rotationally and axially support the rotor 108, to transfer loads from the actuator assembly 102 to the housing 6. In other words the rotor 108 is rotatable about an axis 10 while its translation along the axis 10 can be restricted. The axis of rotation 10 of the rotor 108 is hereinafter referred to as "rotor axis". Fig. 2 shows a sectional view through the rotor axis 10.

The rotor 108 is formed essentially as a hollow cylinder and has an axial hole so as to have a wall thickness. Two slots 120 are provided in the wall of the rotor 108. The slots 120 pass though the wall thickness. Alternatively the slots may pass part of the way through the wall thickness. The surfaces of the slots 120 shown in Fig. 2 are inclined to the section plane. Alternatively the slots 120 may be inclined (helical) to the rotor axis 10 only in regions.

The rotor 108 is connected at its axial end opposite to the spool end to a motor 22 via a transmission 124 comprising transmission elements 127. The transmission 124 engages with a toothed portion 126 on the outer periphery of the rotor 108. The toothed portion 126 acts as a drive gear and may be provided as an element separate from the rotor 108 and attached to it, or integrally formed with the rotor 108. The transmission elements are gears 127, but other transmission elements are possible, such as splines and belts. The transmission 124 is configured to adjust the speed and torque of the motor shaft 22 to suit the rotation requirements of the rotor 108. The transmission 124 may consist of e.g. one to five gears depending on the load required to set the spool position. In the present embodiment the axes of rotation of the motor 22 and rotor 108 are parallel, and the motor 22 is placed alongside the rotor 108.

The output member 116 comprises a pin 134 inserted in a radial hole at the axial end of the output member 116 which is an end opposite to the interface 114 between the hydraulic valve and the actuator assembly 108. The pin 134 protrudes preferably equally from both ends of the hole to effect a "T" shape to form two protrusions. The cylindrical surface of each pin end may preferably be provided with a respective bearing 110, 111.

The output member 116 has a portion of increased diameter 117 at its end opposite to the interface 114 between the hydraulic valve and the actuator assembly 108.

The output member 116 is inserted into the hole of the rotor 108. The increased diameter portion 117 of the output member 116 bears on the inner periphery of the rotor 108, optionally via a bearing (not shown). The slots 120 of the rotor 108 engage with the pin ends via the optional pin bearings 110, 111 so that contact is made between the bearings 110, 111 and at least one wall of the slots 120.

When the rotor 108 is prevented from rotating, the output member 116 is restricted from linear movement by means of the side walls of the slot restricting movement of the pins.

When the rotor 108 rotates, the slots 120 move relative to the pin 134 so that the slot walls impinge on the pin 134 and cause the output member 116 to translate. One slot 120 engages with a respective pin end. The output member 116 is guided by a bushing 118 provided in the through hole of the housing 6. The bushing 118 allows the output member 116 to translate and rotate with respect to the rotor 108. The output member 116 is prevented from rotating together with the rotor 108, e.g. by being rotationally fixed relative to the housing 6. Such a rotation restricting means may be e.g. a square drive or splines, and may be provided externally to the actuator assembly 102, as long as the rotor 108 can rotate relative to the output member 116.

In addition to the advantages of the first embodiment, the second embodiment has the following further advantages.

The output member 116 is inserted in a hole in the rotor which results in a compact construction. The shaft 116 is supported by a bearing 118 at one axial end of the rotor 108. The rotor 108 provides additional bearing support at the increased diameter portion 117. Therefore the rotor 108 can support the output member 116 so the construction is even more compact.

The longitudinal axis of the output member 116 is coaxial with the rotor 108. The common axes allow for a simplified and more compact construction. Only simple features need to be machined to form the rotor 108, so manufacture is facilitated.

The rotor 108 of the second embodiment comprises two helical slots 120 positioned on opposite sides of the periphery of the rotor 108, i.e. equispaced in the circumferential direction. The pin ends on the output member 116 extend in opposite directions, i.e. are equispaced in the circumferential direction. The loads between the rotor 108 and output member 116 are distributed, and balanced on either side of the rotor axis 10, so the construction is more robust. This effect can be achieved by a plurality of slots and respective pin ends, preferably equispaced in the circumferential direction.

The pin 134 extends from the output member 116 on both sides of the pin 134, so that a single pin 134 provides two pin ends (serving as two protrusions). Part count is reduced.

Alternatively to the first embodiment, the motor shaft and the rotor axis 10 are parallel and adjacent to (alongside) each other. The arrangement is compact in the axial direction.

The transmission elements comprise gears 127 whose axes are in a common direction with both the rotor axis 10 and the motor shaft axis. The construction is simpler than a comparative example using e.g. worm, bevel, or crown gears, wherein the axes of rotation of these transmission elements are in different directions requiring e.g. a 90 degree rotation in the power train. The construction of the example embodiment can be simplified in comparison.

Furthermore the slots 120 can be provided on the rotor at a larger pitch circle diameter than for a comparative example wherein a helical groove on the outer periphery of a lead screw engages with a nut. The slot 120 does not need to make as many revolutions to achieve the same stroke, for a given inclination angle. In the comparative example the helical groove must revolve many times around the cylindrical surface of the lead screw and also solid material at a radially central portion must be provided. Thus the construction is further simplified, frictional loads are reduced, and robustness is maintained even when the rotor has an axial hole.

The toothed portion 126 is provided on the outer periphery of the rotor 108. Thus the periphery of the hole in the rotor 108 is free to mount the bearing 113. At the same time the bearing 112 is provided on the outer periphery of the rotor 108, at the opposite end of the rotor. Thus the periphery of the hole in the rotor 108 is free to mount the bushing 118. Thus the construction is even more compact and simplified.

Various modifications to the above-described example embodiments may be made within the scope of the appended claims, as shown in the following examples. Alternatively to the slots 20, 120, a projection or projections may extend from the periphery of the rotor 8, 108, each projection forming a wall. A side face (e.g. a surface which is at least partially facing the axial direction) of each wall engages with the pin or pins. A motion conversion mechanism is effected by at least one side face engaging with (i.e. being contactable with, so as to urge) the pin 134.

Accordingly the walls of the slot may be even be replaced by a single wall engaging with the pin 34 from one side. A biasing means such as a spring may constantly urge the pin 34 against the wall with a biasing force. Rotation of the rotor 8 in one sense urges the output member 16 to translate in a first direction. When the rotor 8 rotates in the opposite sense, the output member 16 moves under the biasing force in the opposite direction, toward its original position.

In the second embodiment the walls of the slots 120 are inclined to the rotor axis 10. Alternatively the wall surfaces may comprise a trajectory orthogonal to the rotor axis 10. The angle of rotation of the rotor can be set so that the spool is held in a predetermined position. Forces transmitted from the spool to the rotor 108 are not transmitted to the motor 22.

The pin or pins may be provided on the rotor, and the slot or projection may be provided on the output member. With this arrangement a motion conversion mechanism is still effected. When the output member and rotor are not coaxial, the wall may be provided on the rotor with the pin or pins provided on the output member.

Alternatively to a single pin, two pins may be provided, each pin forming a protrusion. The pin 34; 134 may extend inclined to, or entirely radially to, the rotor axis 10.

The output member 16; 116 may have a flexible-shaft portion in the region of the interface 14; 114. This helps to reduce the transmission of any side loads from the actuator assembly to the spool.

The motor 22 need not be a DC motor, but may alternatively be a DC brushless or stepper motor.

The ECU 32, the motor 22, the actuator assembly 2, and the spool 4 are housed in a single housing 6. However it is possible to provide separate housings for these elements.

In the described embodiments the actuator assembly 2; 102 forms a motion conversion mechanism that converts rotational motion to linear motion. In this way a motor 22 with a rotational output member can linearly actuate the spool of a hydraulic valve, preferably in either direction.

Disclosed is an actuator assembly for a hydraulic valve comprising a housing and a spool linearly translatable in the housing; the actuator assembly comprises an output member to translate the spool, and a rotor drivable about its axis of rotation; one of the rotor and the output member has at least one slot or projection comprising a wall extending around the periphery of the one of the rotor and the output member; a side surface of the wall is at least in regions inclined to the rotor axis and urgably engages with a pin provided on the other of the rotor and the output member; the output member may be restricted, preferably prevented, from rotating together with the rotor and/or from rotating relative to the housing; instead or in addition, the rotor may be restricted, preferably prevented, from translation together with the output member and/or from translation relative to the housing. The actuator assembly is configured so that rotation of the rotor relative to the output member is transformed to translation of the output member relative to the rotor and/or the housing by means of a relative movement between the wall and the pin. Also disclosed is a hydraulic valve assembly comprising the actuator assembly.

### Reference Signs

- 1; 101: hydraulic valve assembly
- 2; 202: actuator assembly
- 4: spool
- 6: housing
- 8; 108: rotor
- 10: rotor axis
- 12; 112: rotor bearing
- 13; 113: rotor bearing
- 14; 114: interface
- 16; 116: output member
- 18; 118: bearing
- 19: bearing
- 20; 120: slots
- 22: motor
- 24; 124: transmission
- 30: sensor
- 32: ECU
- 34; 134: pin
- 36: CAN signal
- 37: main body
- 38: extension
- 40: passageways
- 110: bearing
- 111: bearing
- 117: increased diameter portion
- 126: toothed portion
- 127: transmission elements

## Claims

1. Actuator assembly for a hydraulic valve, comprising:
a rotor (8; 108) rotatable about an axis (10); and
an output member (16; 106) for actuating a spool (4); wherein
one of the rotor and the output member (16; 106) comprises a wall whose trajectory is at least in regions helical with respect to the axis (10),
the wall engages with a protrusion (34; 134) provided on the other of the rotor (8; 108) and the output member (16; 106), and
the actuator assembly (2; 102) is configured so that relative rotation between the rotor (8; 108) and the output member (16; 106) about the axis (10) urges the output member (16; 106) relative to the rotor (8; 108) in the direction of the axis (10), **characterized in that**
the wall extends around only a part of the periphery of the one of the rotor (8; 108) and the output member (16; 106) when viewed along the axis (10).

2. Actuator assembly according to claim 1, wherein the output member (106) is provided in a hole in the rotor (108).

3. Actuator assembly according to one of the previous claims, wherein the rotor (8; 108) comprises the wall.

4. Actuator assembly according to one of the previous claims, wherein the one of the rotor (8; 108) and the output member (16; 106) has two walls forming a slot (20; 120) engaging with the protrusion (34; 134).

5. Actuator assembly according to claim 4, wherein the one of the rotor (108) and the output member (106) has a plurality of slots (120) each engaging with a respective protrusion (134).

6. Hydraulic valve assembly comprising:
a housing (6);
a spool (4) linearly translatable in the housing (6); and
an actuator assembly (2; 102) according to one of the previous claims, wherein the output member (16; 106) is connected to the spool (4).

7. Hydraulic valve assembly according to claim 6, wherein
the output member (16; 106) is restricted from rotation relative to the housing (6), and the rotor (8; 108) is restricted from translation relative to the housing (6).
